(19) Europäisches Patentamt
European Patent Office
Office européen des brevets

(11) Veröffentlichungsnummer: **0 593 923 B1**

(12) **EUROPÄISCHE PATENTSCHRIFT**

(45) Veröffentlichungstag der Patentschrift: **09.08.95**

(51) Int. Cl.⁶: **C09B 49/00**, C09B 69/04, C09D 11/00, C09D 11/16

(21) Anmeldenummer: **93115311.8**

(22) Anmeldetag: **23.09.93**

(54) **Wasserunlösliche Schwefelfarbstoffe, ihre Herstellung und Verwendung.**

(30) Priorität: **19.10.92 DE 4235147**

(43) Veröffentlichungstag der Anmeldung: **27.04.94 Patentblatt 94/17**

(45) Bekanntmachung des Hinweises auf die Patenterteilung: **09.08.95 Patentblatt 95/32**

(84) Benannte Vertragsstaaten: **AT CH DE ES FR GB IT LI**

(56) Entgegenhaltungen: **EP-A- 0 325 172**

(73) Patentinhaber: **CASSELLA Aktiengesellschaft
Hanauer Landstrasse 526
D-60386 Frankturt (DE)**

(72) Erfinder: **Bauer, Wolfgang, Dr.
Masurenstrasse 6
D-63477 Maintal (DE)**
Erfinder: **Steckelberg, Willi, Dr.
Goldgrabenstrasse 24
D-65719 Hofheim (DE)**
Erfinder: **Ritter, Josef, Dr.
Haingrabenstrasse 17a
D-65812 Bad Soden (DE)**
Erfinder: **Mauelshagen, Wilhelm
Vorm Grenzgraben 12
D-65520 Bad Camberg (DE)**

(74) Vertreter: **Muley, Ralf, Dr.
Cassella AG,
Patentabteilung,
Hanauer Landstrasse 526
D-60386 Frankturt (DE)**

EP 0 593 923 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft schwarze wasserunlösliche Schwefelfarbstoffe der Formel I

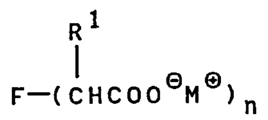

(I)

worin
F den Farbstoffchromophor von C.I. Sulphur oder Leuco Sulphur Black 1, C.I. No.53185; C.I. Sulphur oder Leuco Sulphur Black 2, C.I. No.53195; C.I. Sulphur oder Leuco Sulphur Black 5, C.I. No. 53205; C.I. Sulphur Black 6, C.I. No. 53295; C.I. Sulphur Black 7, C.I. No. 53300; C.I. Sulphur oder Leuco Sulphur Black 10, C.I. No. 53190; C.I. Sulphur Black 11, C.I. No. 53290, oder C.I. Sulphur oder Leuco Sulphur Black 12, C.I. No.53200,
$R^1$ Wasserstoff, Alkyl,
$M^{\oplus}$ ein Kation der Formel II

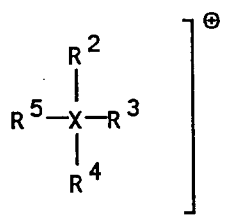

(II)

X Stickstoff oder Phosphor,
$R^2$, $R^3$, $R^4$, $R^5$ unabhängig voneinander Wasserstoff, einen gegebenenfalls substituierten und/oder durch Heterogruppierungen und/oder Arylen unterbrochenen aliphatischen Rest, einen gegebenenfalls substituierten und/oder durch Heterogruppierungen unterbrochenen cycloaliphatischen Rest, einen gegebenenfalls substituierten Arylrest oder $-(CH_2CH_2O)_mR^6$ bedeuten, oder 2 oder 3 der Reste $R^2$, $R^3$, $R^4$, $R^5$ zusammen mit dem quartären Atom X, an das sie gebunden sind, einen heterocyclischen Ring bilden, der auch noch andere Heterogruppierungen enthalten und/oder substituiert sein kann, und
$R^6$ Wasserstoff, Alkyl,
m eine Zahl von 1 bis 5
bedeuten,
n eine so große Zahl bedeutet, daß der Farbstoff I 5 bis 20 Gew.% $-COO^{\ominus}$-Gruppen enthält,
wobei in dem Kation II die Summe der Kohlenstoffatome der in $R^2$, $R^3$, $R^4$ und $R^5$ vorhandenen hydrophoben Reste mindestens 6 beträgt.

Die Erfindung betrifft auch ein Verfahren zur Herstellung der erfindungsgemäßen Schwefelfarbstoffe der Formel I und ihre Verwendung und eine Aufzeichnungsflüssigkeit.

Die Reste $R^2$ bis $R^5$ können gleich oder verschieden sein. Da in dem Kation der Formel II die Summe der Kohlenstoffatome in den vorhandenen hydrophoben, d.h. nicht wasserlöslich machenden Resten, mindestens 6 betragen muß, bedeutet dies, daß die Reste $R^2$ bis $R^5$ nicht alle Wasserstoff und/oder $-(CH_2CH_2O)_mR^6$ bedeuten können. Vorzugsweise beträgt die Summe der Kohlenstoffatome in den im Nation II vorhandenen hydrophoben Resten mindestens 7, besonders bevorzugt mindestens 8.

Die für $R^1$ und $R^6$ stehenden Alkylreste können geradkettig oder verzweigt sein. Als Alkylreste für $R^1$ sind Methyl und Ethyl bevorzugt. Als Alkylrest für $R^6$ sind solche mit 1 bis 4 C-Atomen, insbesondere Methyl und Ethyl bevorzugt.

Die für $R^2$ bis $R^5$ stehenden aliphatischen Reste können geradkettig oder verzweigt, gesättigt oder ungesättigt sein. Die aliphatischen Reste $R^2$ bis $R^5$ sind bevorzugt solche mit 1 bis 30 C-Atomen. Bevorzugt sind dabei geradkettige oder verzweigte Alkyl- oder Alkenyl-reste. Die Alkylreste weisen besonders bevorzugt 1 bis 22 C-Atome und die Alkenylreste besonders bevorzugt 2 bis 22 C-Atome auf. Geeignete aliphatische Reste sind z.B.: Methyl, Ethyl, n-Propyl, i-Propyl, n-Butyl, i-Butyl, sec.Butyl, tert-Butyl, n-Pentyl, i-Pentyl, n-Hexyl, i-Hexyl, n-Octyl, i-Octyl, Nonyl, Decyl, Dodecyl, Tetradecyl, Hexadecyl, Octadecyl, Oleyl, Kokosfettalkyl, 9-Octadecenyl, Talgfettalkyl, Soyaölalkyl. Für $R^2$ bis $R^5$ sind besonders bevorzugte Alkylre-

ste: Methyl, Ethyl, Propyl, Butyl, Pentyl, Hexyl, Octyl, Nonyl, Decyl, Dodecyl, Tetradecyl sowie Hexadecyl, wobei diese Reste ab $C_3$ jeweils auch verzweigt vorliegen können.

Die aliphatischen Reste können auch ein- oder mehrfach substituiert und/oder durch Heterogruppierungen und/oder Arylen unterbrochen sein. Als Substituenten sind insbesondere zu nennen: Hydroxy, Alkoxy, insbesondere $(C_1$-$C_4)$Alkoxy,das geradkettig oder verzweigt sein kann, primäre, sekundäre und tertiäre Aminogruppen, Aryl, insbesondere Phenyl, das ein-, zwei- oder dreifach durch insbesondere Phenyl, $(C_1$-$C_4)$Alkyl, $(C_1$-$C_4)$Alkoxy, Halogen, Trifluormethyl substituiert sein kann. Der aliphatische Rest kann auch ein- oder mehrfach durch Heterogruppierungen unterbrochen sein. Unter Heterogruppierungen werden in diesem Zusammenhang insbesondere verstanden: -O-, -S-, -NH-, -N($(C_1$-$C_4)$Alkyl)-, ferner Estergruppierungen (-COO-und -OOC-) und Amidgruppierungen (-CO-NH-, -NH-CO-, -CO-N($(C_1$-$C_4)$Alkyl), -N($(C_1$-$C_4)$Alkyl-CO)-), aber auch bivalente heterocyclische Reste, die sich z.B. von Pyrrol, Pyrrolidin, Pyridin, Piperidin, Imidazol ableiten können. Der aliphatische Rest kann auch durch Arylen, vorzugsweise Phenylen, insbesondere 1,4-Phenylen, unterbrochen sein.

Bevorzugte substituierte aliphatische Reste sind aliphatische Reste mit 1 bis 6 C-Atomen, die mit einem gegebenenfalls substituierten $(C_6$-$C_{12})$Arylrest substituiert sind, insbesondere ($(C_6$-$C_{12})$Aryl-$(C_1$-$C_6)$alkylreste. Die $(C_6$-$C_{12})$Arylreste sind insbesondere Phenyl, $\alpha$- und $\beta$-Naphthyl. Derartige substituierte aliphatische Reste sind z.B. Benzyl, Phenethyl, Phenylpropyl, Phenylbutyl, Phenylhexyl, $\alpha$- und $\beta$-Naphthyl-methyl, -ethyl, -propyl, -pentyl, -hexyl, 4-Biphenyl-methyl. Benzyl ist für den $(C_6$-$C_{12})$Aryl-$(C_1$-$C_6)$alkyl-rest bevorzugt.

Die cycloaliphatischen Reste können einkernige oder mehrkernige Cycloalkyl- oder Cycloalkenyl-Reste sein. Normalerweise enthalten sie mindestens 5 C-Atome, vorzugsweise 5 bis 12 C-Atome. Besonders bevorzugt sind Cyclopentyl und Cyclohexyl.

Auch die cycloaliphatischen Reste können in gleicher Weise wie die aliphatischen Reste substituiert und/oder durch Heterogruppierungen unterbrochen sein. Als Substituenten kommen insbesondere die bei den aliphatischen Resten genannten Substituenten und vorzugsweise geradkettiges oder verzweigtes $(C_1$-$C_{22})$-Alkyl und/oder $(C_1$-$C_{22})$-Alkoxy und als Heterogruppierungen die bereits bei den aliphatischen Resten genannten Heterogruppierungen, insbesondere -O-, -S-, -NH-, -N($(C_1$-$C_4)$Alkyl), Ester- und Amidgruppierungen in Betracht.

Der für $R^2$ bis $R^5$ stehende Arylrest ist ein $\alpha$- oder $\beta$-Naphthylrest, vorzugsweise ein Phenylrest.

Der Arylrest kann auch ein- oder mehrfach substituiert sein, insbesondere durch Hydroxy, Halogen, Trifluormethyl, primäre, sekundäre und tertiäre Aminogruppen, vorzugsweise aber durch einen gegebenenfalls substituierten und/oder durch Heterogruppierungen und/oder Arylen unterbrochenen aliphatischen Rest und/oder einen gegebenenfalls substituierten und/oder durch Heterogruppierungen unterbrochenen cycloaliphatischen Rest. Für diese gegebenenfalls substituierten und/oder unterbrochenen aliphatischen und cycloaliphatischen Reste gilt das gleiche, das bereits für die für $R^2$ bis $R^5$ stehenden aliphatischen und cycloaliphatischen Reste angegeben worden ist.

Wenn 2 oder 3 der Reste $R^2$ bis $R^5$ zusammen mit dem quartären Atom X, an das sie gebunden sind, einen heterocyclischen Ring bilden, dann stellt das Atom X vorzugsweise Stickstoff dar. Der heterocyclische Ring kann gesättigt, ungesättigt oder aromatisch sein und kann neben dem Atom X auch noch andere Heteroatome, wie z.B. -O-, -N= oder Heteroatomgruppierungen, wie -NH-, -N(Alkyl), insbesondere -N($(C_1$-$C_4)$Alkyl)- enthalten, sowie einen ankondensierten Ring besitzen. Der heterocyclische Ring ist insbesondere ein 5- oder 6-gliedriger Ring, gegebenenfalls mit einem ankondensierten aromatischen 6-Ring. Der heterocyclische Ring kann auch ein- oder mehrfach substituiert sein, insbesondere durch gegebenenfalls substituierte und/oder durch Heterogruppierungen und/oder Arylen unterbrochene aliphatische Reste und/oder durch gegebenenfalls substituierte und/oder durch Heterogruppierungen unterbrochene cycloaliphatische Reste, durch Hydroxy, Halogen, primäre, sekundäre oder tertiäre Aminogruppen. Für die als Substituenten genannten, gegebenenfalls substituierten und/oder unterbrochenen aliphatischen und cycloaliphatischen Reste gilt das gleiche, das bereits für die für $R^2$ bis $R^5$ stehenden aliphatischen und cycloaliphatischen Reste angegeben worden ist.

Als Substituenten kommt insbesondere geradkettiges oder verzweigtes $(C_1$-$C_{22})$Alkyl und/oder $(C_1$-$C_{22})$Alkoxy in Betracht.

Sekundäre und tertiäre Aminogruppen sind insbesondere solche, die geradkettige oder verzweigte $(C_1$-$C_4)$Alkylreste tragen.

Bevorzugte Substituenten für cycloaliphatische, heterocyclische und Aryl-Reste sind geradkettige und verzweigte $(C_1$-$C_{22})$Alkyl- oder $(C_1$-$C_{22})$Alkoxyreste.

In einem erfindungsgemäßen Farbstoff der Formel I können auch verschiedene Kationen der Formel II und/oder verschiedene Reste $R^1$ vorhanden sein.

Bevorzugte erfindungsgemäße Farbstoffe der Formel I weisen einen Gehalt von 7 bis 15 Gew.% $-COO^{\ominus}$-Gruppen auf.

Besonders bevorzugte erfindungsgemäße Farbstoffe der Formel I besitzen als F den Farbstoffchromophor von C.I. Leuco Sulphur Black 1 und/oder weisen einen Gehalt von 8 bis 14 Gew.% $-COO^{\ominus}$-Gruppen auf.

Die erfindungsgemäßen Farbstoffe der allgemeinen Formel I, die einheitliche oder gemischte Kationen der genannten Art aufweisen können, lassen sich dadurch herstellen, daß ein Schwefelfarbstoff der Formel III, worin $F^{\ominus}$ den Farbstoffchromophor von C.I. Sulphur Black 1, 2, 5, 6, 7, 10, 11 oder 12 in der Leukoform bedeutet, mit einer $\alpha$-Halogencarbonsäure der Formel IV oder ihrem Alkalisalz umgesetzt wird, wobei die Reaktion (1) abläuft:

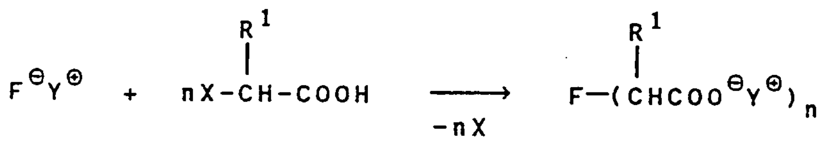


(1)

(III) (IV) (Ia)

und daß der dabei gebildete Farbstoff der Formel Ia für den Fall, daß $F^{\ominus}$ bzw. F den Farbstoffchromophor des C.I. Leuco Sulphur Black 6, 7 oder 11 bedeutet, oxidiert, und für den Fall, daß $F^{\ominus}$ bzw. F den Farbstoffchromophor des C.I. Leuco Sulphur Black 1, 2, 5, 10 oder 12 bedeutet, gewünschtenfalls oxidiert wird, wodurch F in den Farbstoffchromophor des C.I. Sulphur Black 1, 2, 5, 6, 7, 10, 11 oder 12 umgewandelt und anschließend mit einer quartären Verbindung der Formel V umgesetzt wird, wobei sich nach der Reaktion (2) der erfindungsgemäße Farbstoff I bildet:

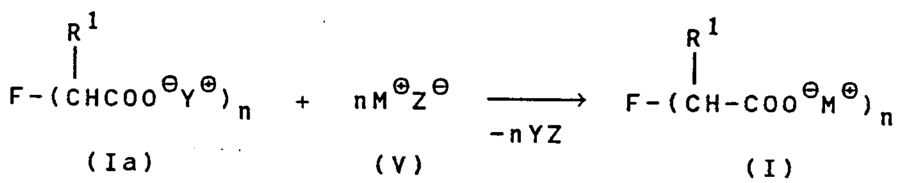


(2)

(Ia) (V) (I)

In den vorstehenden Reaktionsgleichungen (1) und (2) bedeuten:
$Y^{\oplus}$ ein Alkalimetallkation, vorzugsweise $Na^{\oplus}$,
X Chlor oder Brom,
$Z^{\ominus}$ ein Säureanion,
$M^{\oplus}$, $R^1$ und n haben die bereits genannten Bedeutungen.

Die Reaktion (1) wird normalerweise im wäßrigen Medium bei pH-Werten von 7 bis 14, vorzugsweise 9 bis 11, und Temperaturen von 30 bis 120 °C, vorzugsweise 40 bis 100 °C durchgeführt.

Bei der Reaktion (1) kann auch ein Gemisch verschiedener Farbstoffe der Formel III und/oder ein Gemisch verschiedener $\alpha$-Halogencarbonsäuren der Formel IV und/oder ihrer Alkalisalze eingesetzt werden.

Die Leucofarbstoffe der Formel III sind bekannt. Bei der Synthese des Leuco-Schwefelfarbstoffs C.I. Leuco Sulphur Black 1, C.I. No. 53185 wird 2,4-Dinitrophenol oder dessen Natriumsalz (das in situ durch alkalische Hydrolyse von 1-Chlor-2,4-dinitrobenzol hergestellt werden kann) z.B. mit Natriumpolysulfid in wäßriger Lösung bei 110 bis 120 °C für 48 bis 72 Stunden unter Rückfluß erhitzt (vgl. z.B. Colour Index, Third Edition, Volume 4 (1971), S.4485, und die dort zitierte Literatur).

Die Leucoschwefelfarbstoffe
C.I. Leuco Sulphur Black 2, C.I. No. 53195,
C.I. Leuco Sulphur Black 5, C.I. No. 53205,
C.I. Leuco Sulphur Black 10, C.I. No. 53190 und
C.I. Leuco Sulphur Black 12, C.I. No. 53200
werden ähnlich wie C.I. Leuco Sulphur Black 1 hergestellt. Dabei werden anstelle von 2,4-Dinitrophenol eingesetzt:
bei C.I. Leuco Sulphur Black 2: ein Gemisch von 2,4-Dinitrophenol mit Pikrinsäure oder Pikraminsäure;
bei C.I. Leuco Sulphur Black 5: Pikrinsäure oder Pikraminsäure;

bei C.I. Leuco Sulphur Black 10: ein Gemisch aus 2,4-Dinitrophenol und p-Aminophenol;
bei C.I. Leuco Sulphur Black 12: ein Gemisch aus 2,4-Dinitrophenol und 4-(2,4-Dinitro-anilino)-phenol,
(vgl. z.B. Colour Index, loc.cit. Seiten 4485 und 4486 und die dort zitierte Literatur).

Bei der Herstellung von C.I. Leuco Sulphur Black 11, C.I. No. 53290, wird 4-2-Naphthylaminophenol, neben geringen Mengen Phenol und 4,4'-Iminodiphenol, in einer Lösung von Natriumpolysulfid in Butanol 30 Stunden am Rückfluß bei 108 °C erhitzt (vgl. z.B. Colour Index loc.cit., S.4490, und die dort zitierte Literatur, insbesondere Bios Final Report No. 983, S.59, 117-129). C.I. Leuco Sulphur Black 6, C.I. No. 53295, C.I. Leuco Sulphur Black 7, C.I. No. 53300, werden ähnlich hergestellt, wobei zusätzlich zu 4-2-Napthylaminophenol bei C.I. Leuco Sulphur Black 6 noch kleine Mengen von p-Nitrophenol und 2,4-Diaminotoluol und bei C.I. Leuco Sulphur Black 7 noch kleine Mengen von 4-(3-Carbazolylamino)-phenol und p-Nitrophenol eingesetzt werden (vgl. Colour Index loc.cit., S.4491 und 4490, und die dort zitierte Literatur.)

Die für die Herstellung der erfindungsgemäßen Schwefelfarbstoffe I als Ausgangsprodukte benötigten Leucoschwefelfarbstoffe der Formel III können aber auch aus den Schwefelfarbstoffen C.I. Sulphur Black 1, C.I. No. 53185, C.I. Sulphur Black 2, C.I. No. 53195, C.I. Sulphur Black 5, C.I. No. 53205, C.I. Sulphur Black 6, C.I. No. 53295, C.I. Sulphur Black 7, C.I. No. 53300, C.I. Sulphur Black 10, C.I. No. 53190, C.I. Sulphur Black 11, C.I. No. 52290, C.I. Sulphur Black 12, C.I. No. 53200, durch an sich bekannte Umsetzung mit Reduktionsmitteln, wie z.B. $Na_2S$ und/oder NaHS oder Natriumformaldehydsulfoxylat hergestellt werden.

C.I.Leuco Sulphur Black 1 kann auch aus C.I. Solubilized Sulphur Black 1, C.I. No. 53186, mit Reduktionsmitteln erhalten werden (vgl. beispielsweise Rev. Pure Appl. Chem. 12, 72 (1962).

Die Struktur der Leucoschwefelfarbstoffe der Formel III ist noch nicht im einzelnen bekannt. Vermutlich handelt es sich um ein Gemisch von verschiedenen Farbstoffen. Für das C.I. Leuco Sulphur Black 1 sind die Strukturen VI und VII (K.Venkataraman "The Chemistry of Synthetic Dyes", Vol.II, S.1090, (1952)) bzw. VIII (F.Gordon und P.Gregory "Organic Chemistry in Color", S.16, Springer Verlag (1983)) vorgeschlagen worden:

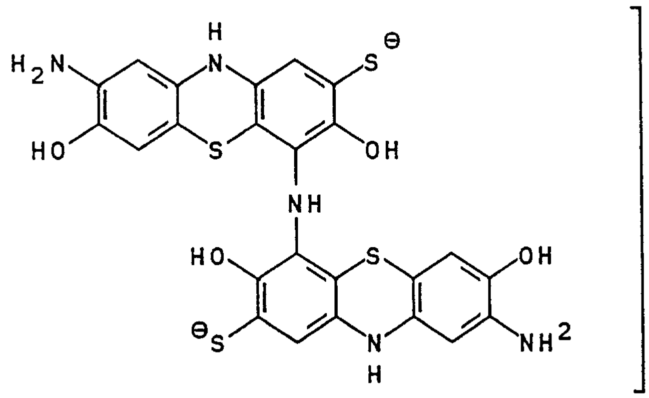

2 $Na^{\oplus}$ (VI)

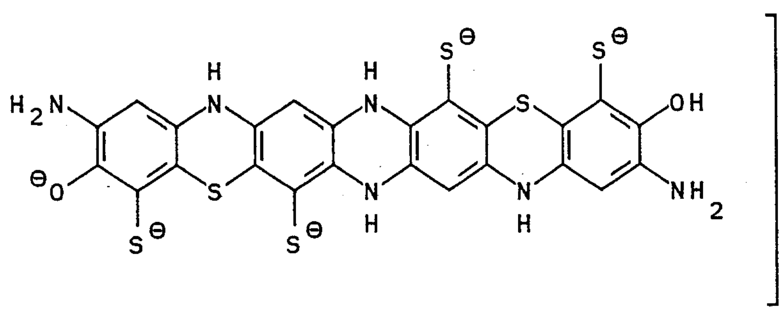

5 $Na^{\oplus}$ (VII)

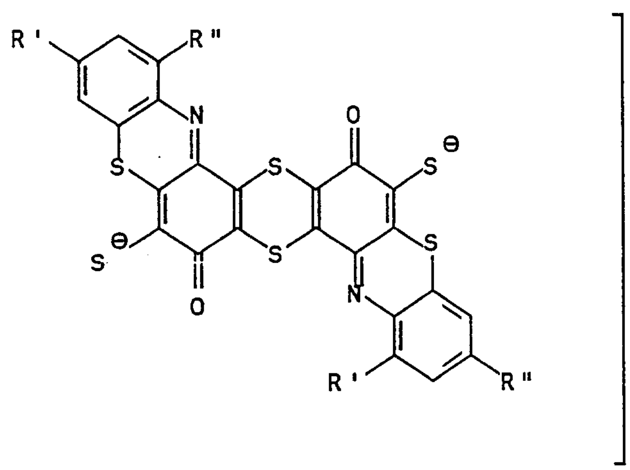

2 $Na^{\oplus}$ (VIII)

(R', R" = OH, $NH_2$)

Das bei der Synthese der Leucoschwefelfarbstoffe anfallende Reaktionsgemisch kann, gegebenenfalls nach Verdünnung mit Wasser, direkt bei der Synthese der Farbstoffe Ia nach (1) eingesetzt werden.

Als $\alpha$-Halogencarbonsäuren der Formel IV werden bevorzugt verwendet: $\alpha$-Chlor- oder $\alpha$-Brom-essigsäure, $\alpha$-Chlor- oder $\alpha$-Brom-propionsäure und $\alpha$-Chlor- oder $\alpha$-Brom-buttersäure. Die $\alpha$-Halogencarbonsäuren können auch in Form ihrer Alkalisalze, insbesondere ihrer Natriumsalze, eingesetzt werden.

Da die einzusetzenden Leucoschwefelfarbstoffe der Formel III häufig direkt aus den organischen Ausgangsprodukten, wie 2,4-Dinitrophenol, hergestellt werden, ist es bequem, die bei der Reaktion (1) einzusetzende Menge an $\alpha$-Halogencarbonsäure der Formel IV oder ihres Alkalisalzes auf das Ausgangsprodukt des Leucoschwefelfarbstoffs, wie z.B. 2,4-Dinitrochlorbenzol, zu beziehen. Bezogen auf 1 Mol dieses bei der Synthese des Leucoschwefelfarbstoffs der Formel III eingesetzten organischen Ausgangsprodukts (das auch ein Gemisch verschiedener organischer Verbindungen darstellen kann), kann die eingesetzte Menge an α-Halogencarbonsäureoder ihres Alkalisalzes in weiten Grenzen von z.B. 0,4 bis 2 Mol α-Halogencarbonsäure oder ihres Alkalisalzes, vorzugsweise 0,5 bis 1,5 Mol, und ganz besonders bevorzugt 0,6 bis 1,3 Mol, variiert werden.

Die Umsetzung nach der Reaktion (1) erfolgt zweckmäßigerweise in wäßriger Phase bei einem alkalischen pH-Wert. Der alkalische pH-Wert ist normalerweise in der wäßrigen Phase von der Herstellung des Leuco Schwefelfarbstoffs her vorhanden.

Die bei der Reaktion (1) erhaltenen wäßrigen Lösungen sind für den Fall, daß F in Formel Ia den Farbstoffchromophor von C.I. Leuco Sulphur Black 1, 2, 5, 10 oder 12 bedeutet, schwarze Lösungen und können direkt mit einer quartären Verbindung V oder einem Gemisch derartiger quartären Verbindungen nach der Reaktion (2) umgesetzt werden.

Für den Fall, daß F in der Formel Ia den Farbstoffchromophor von C.I. Leuco Sulphur Black 6, 7 oder 11 bedeutet, werden bei der Reaktion (1) grünliche bzw. dunkelgrüne Lösungen der Verbindungen Ia erhalten, in denen der in der Leuco-Form vorliegende Farbstoffchromophor F durch Oxidation nach in an sich bekannter Weise in den schwarzen Farbstoffchromophor des C.I. Sulphur Blacks 6, 7 oder 11 überführt werden muß. Für diese Oxidation sind z.B. alle Oxidationsmittel geeignet, die aus der Schwefelfarbstoffherstellung oder der Schwefelfarbstofffärberei für die Überführung eines Schwefelfarbstoffs aus der Leucoform in die eigentliche Farbstofform bekannt sind, so z.B. Brom, Iod, Natriumchlorit, Natriumbromat in schwach saurer Lösung katalysiert durch Vanadat, vorzugsweise aber Wasserstoffperoxid in saurer oder vorzugsweise alkalisch wäßriger Phase. Eine derartige Überführung des Chromophors der Leucoform in die eigentliche Farbstofform ist für den Fall, daß in den Verbindungen Ia F der Farbstoffchromophor von C.I. Leuco Sulphur Black 1, 2, 5, 10 oder 12 darstellt, nicht erforderlich, kann aber gewünschtenfalls durchgeführt werden. Die bevorzugte Oxidation mit Wasserstoffperoxid in wäßriger Phase erfolgt zweckmäßigerweise bei Normaltemperatur oder nur leicht erhöhter Temperatur.

Die Umsetzungen nach der Reaktionsgleichung (2) erfolgen normalerweise im wäßrigen Reaktionsmedium bei pH-Werten von 4 bis 8, vorzugsweise 5 bis 7, und Temperaturen von 0 bis 100 °C, vorzugsweise 10 bis 50 °C. Die dabei als wäßrige Suspension anfallenden wasserunlöslichen erfindungsgemäßen Farbstoffe der Formel I können in bekannter Weise z.B. durch Filtration, Waschen und Trocknen abgetrennt und isoliert werden.

In der Formel V kann $Z^{\ominus}$ das Anion einer schwachen oder starken anorganischen oder organischen Säure sein und sich z.B. von der Salzsäure, Schwefelsäure, Phosphorsäure, Essigsäure, Bromwasserstoffsäure, schwefligen Säure, p-Toluolsulfonsäure ableiten.

Alternativ ist es auch möglich, aus den zunächst erhaltenen wäßrigen Lösungen der Alkalisalze der Farbstoffe der Formel Ia, in der F den Farbstoffchromophor von C.I. Leuco Sulphur Black 1, 2, 5, 10 oder 12 oder von C.I. Sulphur Black 1, 2, 5, 6, 7, 10, 11 oder 12 bedeutet, durch Einstellen eines sauren pH-Werts, insbesondere von pH-Werten von 0 bis 5, vorzugsweise 2 bis 4, die schwerlösliche Farbstoffsäuren der Formel Ib

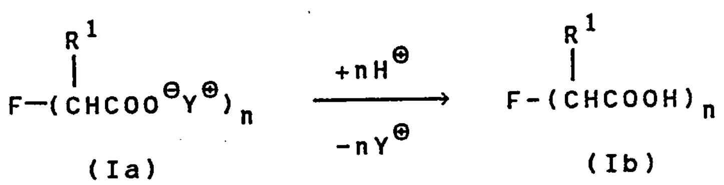


(Ia) (Ib) (3)

abzuscheiden und in an sich bekannter Weise, z.B. durch Filtration abzutrennen und zu isolieren und die Farbstoffsäuren der Formel Ib durch Neutralisation mit einem Amin der Formel IX

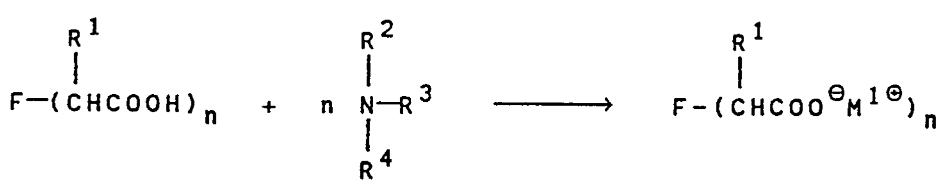

(Ib) (IX) (Ic) (4)

worin
$M^{1\oplus}$ die Bedeutung von $M^{\oplus}$ mit X = N und $R^5$ = H besitzt, in erfindungsgemäße Farbstoffe der Formel Ic zu überführen.

Die pH-Einstellung bei der Reaktion (3) kann mit einer geeigneten Säure, z.B. mit einer starken Säure, insbesondere einer Mineralsäure, wie Salzsäure, Schwefelsäure oder Phosphorsäure, vorgenommen werden.

Aufgrund der Schwerlöslichkeit der Farbstoffsäuren der Formel Ib können die in der Lösung der Farbstoffe der Formel I vorhandenen herstellungsbedingten Salze, wie Chloride, Sulfate, Sulfite oder Thiosulfate, insbesondere Natriumchlorid, Natriumsulfat, Natriumsulfit oder Natriumthiosulfat, leicht entfernt werden.

Die Neutralisation gemäß der Reaktionsgleichung (4) kann in Wasser oder vorzugsweise in einem organischen Lösungsmittel oder Lösungsmittelgemisch, in dem die Farbstoffe der Formel I löslich sind, bei Normaltemperatur, erniedrigter oder erhöhter Temperatur durchgeführt werden. Anschließend werden die Farbstoffe der Formel I gewünschtenfalls in geeigneter, an sich bekannter Weise isoliert.

Als geeignete Amine der Formel IX oder als geeignete Amine, von denen sich die quartären Verbindungen der Formel V durch Quaternierung mit einem Quaternierungsmittel oder durch Salzbildung mit einer anorganischen oder organischen Säure ableiten, sind beispielsweise zu nennen:
n-Hexylamin, Heptylamin, Isoheptylamin, n-Octylamin, iso-Octylamin, tert.-Octylamin, 2-Ethyl-hexylamin, 2,4,4-Trimethyl-2-pentylamin, 1,5-Dimethyl-hexylamin, 1-Methylheptylamin, Nonylamin, Isononylamin, 3,5,5-Trimethylhexylamin, Decylamin, Dodecylamin, Hexadecylamin, Stearylamin, Cocosfettamin, Oleylamin, 6-Ethyl-4-oxadecyl-amin, 11-Methyl-4-oxadecyl-amin, Di-n-Butylamin, Di-2-ethylhexyl-amin, Di-isononylamin, Distearylamin, Dicyclohexylamin, Di-isopropyl-ethylamin, Tri-n-butylamin, Tri-isooctylamin, Dimethyl-cocosfettamin, Dimethyldodecylamin, Tribenzylamin, Dodecylamino-bisethanol, Bis-hydroxyethyl-cocosfettamin, Bis-hydroxyethoxyethyl-cocosfettamin, Tris(3,6-dioxaheptyl)amin, Pyrrolidin, Piperidin, 3- oder 4-Alkyl-piperidine, wie z.B. 4-Methyl-piperidin, 4-Hexyl-piperidin, Alkyl-piperazine und Alkylmorpholine mit mindestens 2 C Atomen im Alkylrest, wie z.B. N-Ethylmorpholin, N-Butylmorpholin, 1-Ethyl-piperazin, 1-Octyl-piperazin, Cyclohexylamin, Dicyclohexylamin, Anilin, im Kern durch $(C_1-C_{22})$Alkyl und/oder $(C_1-C_{22})$Alkoxy substituierte Aniline, wie z.B. o-, m- und p-Toluidin, o-, m- und p-Anisidin, o-, m- und p-Phenetidin, 1- und 2-Naphthylamin, 1,3-Cyclopentandiamin, 2,3-, 2,4-, 2,5-, 2,6-Xylidin, 4-Hexyl-anilin, 4-Octyl-anilin, 4-Decyl-anilin, 4-Butoxy-anilin, N-Methyl-anilin, N-Hexyl-4-pentyl-anilin, Benzylamin, Styrylamin, Diphenylamin, Dibenzylamin, Phenethylamin, 4-Methyl-pyridin, 4-Octylpyridin, 4-Vinyl-pyridin, 4-Allyl-pyridin, Chinolin, Lepidin, Chinaldin, Perhydro-azepin, Perhydro-azecin.

Quartäre Ammonium- und Phosphoniumsalze der Formel V, die sich nach Reaktionsgleichung (2) zur Herstellung der erfindungsgemäßen, wasserunlöslichen Schwefelfarbstoffe I eignen, sind beispielsweise:
Tetrapropylammoniumbromid, Tetrabutylammoniumbromid, Benzyltributylammoniumchlorid, Benzyltriethylammoniumchlorid, Benzyldimethylhexadecylammoniumchlorid, 3-Benzyl-5-(2-hydroxyethyl)-4-methyl-thiazoliumchlorid, Hexadecylpyridiniumchlorid, Methyl-trioctylammoniumchlorid, Methyl-tridecylammoniumchlorid, Dimethyl-di-octylammoniumchlorid, Dimethyl-di-decylammonium-chlorid und -bromid, Dimethyl-di-hexadecylammoniumchlorid, Trimethyl-dodecylammoniumchlorid, Trimethyl-hexadecylammoniumchlorid, Trimethyl-octadecylammoniumchlorid, Tetrabutylphosphoniumacetat, Tributyl-hexadecylphosphoniumbromid, Benzyl-dodecyl-bis(hydroxyethyl)ammoniumchlorid, Tetraoctylanmoniumchlorid, Dimethyl-di-dodecyl-ammoniumchlorid, Dimethyl-di-tetradecyl-ammoniumchlorid, Dimethyl-di-octadecyl-ammoniumchlorid, Dimethyl-di-oleylammoniumchlorid, Dimethyl-dicocosfettalkyl-ammoniumchlorid, Dimethyl-benzyl-cocosfettalkyl-ammoniumchlorid, Methyl-tri-dodecyl-ammoniumchlorid, Trimethyl-decylammoniumchlorid, Trimethyl-dodecyl-ammoniumchlorid, Trimethyl-tetradecyl-ammoniumchlorid, Trimethyl-9-octadecenyl-ammoniumchlorid, Trimethyl-talgfettalkyl-ammoniumchlorid, Trimethyl-soyaölalkyl-ammoniumchlorid, Trimethyl-cocosfettalkyl-ammoniumchlorid, Dimethyl-benzyltetradecyl-ammoniumchlorid, Dimethyl-benzyl-octadecylammoniumchlorid, Dimethyl-benzyl-tetradecyl-anmoniumbromid, Dimethyl-dodecyl-benzyl-ammoniumchlorid, Benzyldioctyl-dodecyl-ammoniumchlorid, 4-Pentadecyl-N-methylpyridinium-bromid, 4-Heptadecyl-N-ethyl-pyridinium-bromid, 4-Tridecyl-N-propyl-pyridinium-bromid, 4-Tridecyl-N-allyl-pyridinium-chlorid, 4-(1-Hexyldecyl)-N-butyl-pyridinium-bromid, 4-(2-Methyloctyl)-N-hexyl-pyridinium-bromid, 4-Ethyl-N-octyl-pyridinium-bromid, 4-Hexyl-N-octyl-pyridinium-bromid, 4-Methyl-N-hexadecylpyridinium-chlorid, N-Octyl-pyridinium-bromid, N-(2-Ethylhexyl)-pyridinium-bromid, N-Dodecyl-pyridiniumchlorid, N-Hexadecyl-pyridinium-bromid, N-Hexadecyl-pyridinium-hydrogensulfat, N-Octadecyl-pyridinium-p-toluolsulfonat, 2-Tridecyl-N-butyl-pyridinium-bromid, 2-Heptyl-N-(2-methyloctyl)-pyridinium-bromid, 2-Pentyl-N-decyl-pyridinium-bromid, 2-Methyl-N-dodecyl-pyridinium-bromid, 2,6-Dimethyl-N-dodecyl-pyridinium-bromid, 2-Methyl-5-ethyl-N-hexadecyl-pyridinium-bromid, Tributyltetradecyl-phosphoniumchlorid, Dimethyl-benzyl-dodecylphosphoniumchlorid, Trimethyl-tetradecyl-phosphoniumchlorid, Trimethyl-hexadecyl-phosphoniumchlorid, Dimethyl-benzyl-octadecyl-phosphoniumchlorid, Tributylcocosalkyl-phosphoniumchlorid.

Die Verbindungen der Formeln V und IX sind bekannt, größtenteils handelsüblich bzw. lassen sich nach den für diese Verbindungsklassen bekannten Herstellungsverfahren synthetisieren.

Es kann zweckmäßig sein, die erforderliche Oxidation der Farbstoffchromophore C.I. Leuco Sulphur Black 6, 7 und 11 in die Farbstoffchromophore C.I. Sulphur Black 6, 7 und 11 oder die gewünschtenfalls durchzuführende Oxidation der Farbstoffchromophore C.I. Leuco Sulphur Black 1, 2, 5, 10 oder 12 in die Farbstoffchromophore C.I. Sulphur Black 1, 2, 5, 10 oder 12 nicht direkt im Anschluß an die Reaktion (1) durchzuführen, sondern vor der Oxidation zunächst die Farbstoffsäuren Ib zu fällen und zu isolieren. Die Farbstoffsäuren Ib werden dann wieder in Lösung gebracht, z.B. durch Eintragen in Wasser oder Einstellung eines alkalischen pH-Werts, z.B. durch Zugabe eines Alkalimetallhydroxids, vorzugsweise Natriumhydroxids. Die dann erfolgende Oxidation wird, wie bereits erwähnt, durchgeführt. Danach wird die Reaktion (2) oder werden die Reaktionen (3) und (4) zur Gewinnung der erfindungsgemäßen Farbstoffe durchgeführt.

Wenn die als Ausgangsprodukt benötigten Leucoschwefelfarbstoffe der Formel III durch Reduktion der entsprechenden Schwefelfarbstoffe hergestellt werden, dann kann die Reaktion (1) auch gleichzeitig mit der Reduktion durchgeführt werden.

Die erfindungsgemäßen wasserunlöslichen schwarzen Farbstoffe der Formel I sind z.B. als Farbmittel für lösungsmittelhaltige Tinten, Schreibtinten und Aufzeichnungsflüssigkeiten, insbesondere für das Tintenstrahl- oder Ink-Jet-Druckverfahren, sowie für das Hot-Melt-Druckverfahren, als Infrarot-Absorber, sowie als Farbmittel und Ladungssteuerungsmittel für elektrophotographische Toner geeignet.

Die Löslichkeit der erfindungsgemäßen wasserunlöslichen Schwefelfarbstoffe der Formel I in organischen Lösungsmitteln ist abhängig von der Kettenlänge und dem Verzweigungsgrad der Substituenten $R^2$ bis $R^5$.

In Alkoholen oder Methylethylketon lösliche Farbstoffe der Formel I erhält man, wenn die Summe der Kohlenstoffatome der in den Resten $R^2$ bis $R^5$ vorhandenen aliphatischen, cycloaliphatischen und/oder Arylalkyl-resten 6 bis 14 beträgt und vorhandene aliphatische Reste insbesondere verzweigt sind. Derartige in organischen Lösungsmitteln lösliche erfindungsgemäße Schwefelfarbstoffe I weisen eine exzellente Lichtechtheit und Wasserechtheit auf und sind hervorragend zur Herstellung von Tinten für industrielle Ink-Jet-Druckverfahren, z.B. zur Codierung, Markierung und Adressierung, geeignet.

Das Tintenstrahl- oder Ink-Jet-Druckverfahren und die Anforderungen an die hierbei verwendeten Tinten und Aufzeichnungsflüssigkeiten sind z.B. beschrieben in: Kirk-Othmer, Encyclopedia of Chemical Technology, 3rd Edt., Vol.20 (1982), 153-156, und in Ullmann's Encyclopedia of Industrial Chemistry, 5th Edt., Vol. A 13 (1989), 588-594. In Ullmann's loc.cit. 595 sowie in Gregory: High Technology Application of Organic Colorants, Plenum Press (1991), 182, sind auch die Anforderungen an Hot-Melt-Inks beschrieben.

Die mit den erfindungsgemäßen schwarzen Farbstoffen der Formel I herstellbaren Tinten und Aufzeichnungsflüssigkeiten für das Ink-Jet-Verfahren besitzen eine hervorragende Lagerstabilität auch in konzentrierter Form und ausgezeichnete Druckeigenschaften, insbesondere ein gutes Ansprech- und Ausstoßverhalten, gute Tröpfchenbildung und hervorragende Bildeigenschaften, insbesondere hinsichtlich Dichte, Farbton, Kontrast, Wasser-, Licht- und Wetterechtheit.

Eine Tinte für das Tintenstrahldruckverfahren bzw. für das Ink-Jet-Druckverfahren besteht aus einer Lösung eines oder mehrerer Farbstoffe der allgemeinen Formel I in einem geeigneten organischen Lösungsmittel oder Lösungsmittelgemisch, insbesondere in Ethanol und/oder Methylethylketon. Andere Lösungsmittel sind z.B. Methanol, Propanol, Isopropanol, Butanol, sec.Butanol; Amide, wie z.B. Dimethylformamid und Dimethylacetamid; Ketone oder Ketonalkohole, wie z.B. Aceton oder Diacetonalkohol; ferner Glykole und Glykolether, wie z.B. Ethylenglykol, Diethylenglykol, Triethylenglykol, Diethylenglykolmonoethylether.

Als nichtflüchtige Vehikel können auch Fettsäuren, und/oder oder Fettsaureester und/oder Sulfonamide vorhanden sein. Die Tinte kann auch noch einen oder mehrere andere Farbstoffe und/oder ein oder mehrere Hilfsmittel, wie z.B. Biocide, Leitsalze oder Mittel zur Einstellung des elektrischen Widerstands, wie z.B. Lithiumchlorid, Natriumchlorid, Natriumsulfat, Ammoniumchlorid, Korrosionsinhibitoren, Verdicker oder Mittel zur Beeinflussung der Viskosität etc. enthalten.

Die Menge der erfindungsgemäßen Farbstoffe der Formel I in der Tinte oder Aufzeichnungsflüssigkeit richtet sich nach der gewünschten optischen Dichte des Bildes. In der Regel enthält die Tinte 0,5 bis 20 Gew.%, vorzugsweise 0,5 bis 15 Gew.%, eines oder mehrerer Schwefelfarbstoffe der Formel I. Die Tinte oder Aufzeichnungsflüssigkeit enthält z.B. 99,5 bis 80, vorzugsweise 99,5 bis 85 Gew.% eines oder mehrerer organischer Lösungsmittel.

Zur Herstellung der Tinten oder Aufzeichnungsflüssigkeiten kann ein erfindungsgemäßer Farbstoff der Formel I, insbesondere ein aus C.I. Leuco Sulphur Black 1 hergestellter erfindungsgemäße Farbstoff, der vorzugsweise einen Gehalt von 7 bis 15 Gew.% $-COO^{\ominus}$-Gruppen aufweist, in einem organischen Lösungsmittel, vorzugsweise in Ethanol und/oder Methyl-ethyl-keton, oder in einem Gemisch organischer Lösungsmittel gelöst und evtl. anschließend mit den anderen Komponenten, Hilfsmitteln etc. versetzt und dann filtriert werden.

Zur Herstellung einer Tinte oder Aufzeichnungsflüssigkeit kann auch die Neutralisation gemäß Reaktionsgleichung (4) zweckmäßigerweise in dem Lösungsmittel oder Lösungsmittelgemisch der Tinte oder Aufzeichnungsflüssigkeit durchgeführt werden. Der dabei entstehenden Lösung des Farbstoffs I können dann gewünschtenfalls noch weitere Hilfsmittel oder Bestandteile der Tinte oder der Aufzeichnungsflüssigkeit zugefügt werden.

Beispiel 1

769,4 g einer 25%igen, aus 202,6 g 2,4-Dinitrochlorbenzol in bekannter Weise hergestellten Lösung von C.I. Leuco Sulphur Black 1 (vgl. z.B.: Fierz-David, Blangey: Grundlegende Operationen der Farbenchemie, 8. Auflage (1952), 329-330) werden mit 500 ml Wasser und bei 60 °C mit einer Lösung von 145,6 g Natrium-Monochloracetat in 700 ml Wasser versetzt. Man rührt 2 Stunden bei 60 °C nach und gibt zur Fällung der Farbsäure 32%ige wäßrige Salzsäure bis zu einem pH-Wert von 7,0 zu. Anschließend versetzt man die schwarze Farbstofflösung mit 670 ml einer 2-molaren Lösung von 2-Ethylhexylammoniumchlorid. Man rührt die erhaltene Farbstoffsuspension 1 Stunde bei 30 °C nach, filtriert, wäscht den Filterkuchen mit 2500 ml Wasser elektrolytfrei und trocknet bei 100 °C.
Ausbeute: 306,5 g schwarzes Pulver
Absorptionsspektrum in Ethanol: $\lambda_{max}$: 620 nm
$COO^{\ominus}$-Gehalt: 10,5 Gew.%
Der Farbstoff eignet sich hervorragend zur Herstellung von Tinten für das Ink-Jet-Verfahren, wobei schwarze Drucke mit exzellenter Lichtechtheit und Wasserechtheit erhalten werden.

Beispiel 2

Das in Beispiel 1 beschriebene Verfahren wird mit einer Lösung von 174,8 g Natrium-Monochloracetat in 800 ml Wasser (statt 145,6 g Natrium-Monochloracetat in 700 ml Wasser) durchgeführt.
Ausbeute: 315,6 g schwarzes Pulver
Absorptionsspektrum in Ethanol: $\lambda_{max}$: 615 nm
$COO^{\ominus}$-Gehalt: 13,7 Gew.%

Beispiel 3

Das in Beispiel 1 wiedergegebene Verfahren wird wiederholt, wobei anstelle einer Lösung von 145,6 g Natrium-Monochloracetat in 700 ml Wasser eine Lösung von 163,1 g Natrium-α-chlorpropionat in 800 ml Wasser eingesetzt wird.
Man erhält 333,1 g eines schwarzen Pulvers.
Absorptionsspektrum in Ethanol: $\lambda_{max}$: 618 nm
$COO^{\ominus}$-Gehalt: 9,9 Gew.%

Beispiel 4

Die Kondensation von 769,4 g einer 25%igen wäßrigen Lösung von C.I. Leuco Sulphur Black 1 mit einer Lösung von 145,6 g Natrium-Monochloracetat wird nach den Angaben des Beispiels 1 durchgeführt. Anschließend werden zur Fällung der Farbsäure 159,0 g 32%ige Salzsäure bis zu einem pH-Wert von 2 zugegeben. Die ausgefallene Farbsäure wird durch Filtration isoliert, mit 3 l Wasser salzfrei gewaschen und bei 100 °C bis zur Gewichtskonstanz getrocknet.
Ausbeute: 217,0 g schwarzes Pulver
$COO^{\ominus}$-Gehalt: 10,5 Gew.%
100,0 g des erhaltenen schwarzen Pulvers werden in 1500 g 95%igem Ethanol eingetragen und mit 68,0 g 2-Ethylhexylamin versetzt und durch Rühren bei 75 °C gelöst. Man erhält 1668 g einer schwarzen, lagerstabilen Tinte, die sich hervorragend für das Ink-Jet-Druckverfahren eignet. Die erhaltenen schwarzen Drucke weisen eine exzellente Lichtechtheit und Wasserechtheit auf.

In der folgenden Tabelle sind weitere erfindungsgemäße schwarze Farbstoffe der allgemeinen Formel I wiedergegeben, die nach den Angaben des Beispiels 1 hergestellt werden können, wobei in Spalte 2 die nach Reaktionsgleichung 2 zur Fällung der wasserunlöslichen schwarzen Schwefelfarbstoffe eingesetzten

Quartärsalze der Formel V aufgeführt sind.

| Beispiel | Quartärsalz der Formel V |
|---|---|
| 5 | 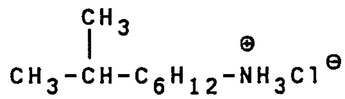 |
| 6 | 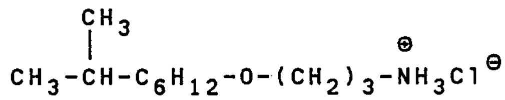 |
| 7 | 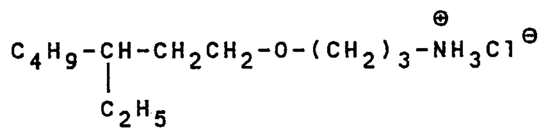 |
| 8 | 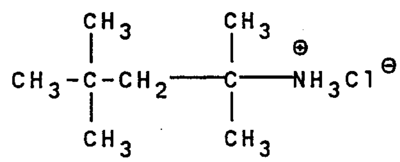 |
| 9 | 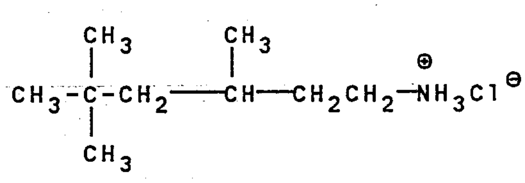 |
| 10 | 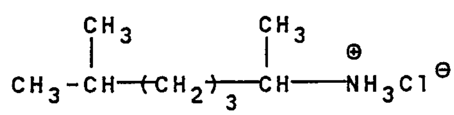 |
| 11 | $C_{12}H_{25}-\overset{\oplus}{N}H_3Cl^{\ominus}$ |
| 12 | $C_{12}H_{25}-\underset{H}{\overset{\oplus}{N}}-(CH_3)_2Cl^{\ominus}$ |
| 13 | $C_8H_{17}-\underset{H}{\overset{\oplus}{N}}-(CH_2CH_2OH)_2Cl^{\ominus}$ |
| 14 | $C_{10}H_{21}\underset{H}{\overset{\oplus}{N}}-(CH_2CH_2OH)_2Cl^{\ominus}$ |

| Beispiel | Quartärsalz der Formel V |
|---|---|
| 15 | $C_{12}H_{25}-\overset{\oplus}{\underset{H}{N}}-(CH_2CH_2OH)_2Cl^{\ominus}$ |
| 16 | $C_{14}H_{29}-\overset{\oplus}{\underset{H}{N}}-(CH_2CH_2\ OH)_2Cl^{\ominus}$ |
| 17 | $C_{18}H_{37}-\overset{\oplus}{\underset{H}{N}}-(CH_2CH_2OH)_2Cl^{\ominus}$ |
| 18 | 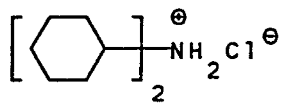 |
| 19 | $\overset{\oplus}{N}-(C_4H_9)_4Cl^{\ominus}$ |
| 20 | $HN^{\oplus}-(C_4H_9)_3Cl^{\ominus}$ |
| 21 | $P^{\oplus}-(C_4H_9)_4Cl^{\ominus}$ |
| 22 | 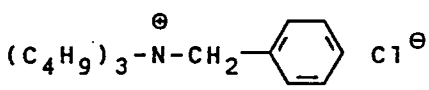 |
| 23 | 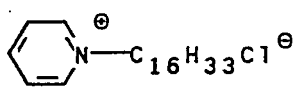 |
| 24 | $(C_{10}H_{21})_2-\overset{\oplus}{N}-(CH_3)_2Cl^{\ominus}$ |
| 25 | $(C_{10}H_{21})_3\overset{\oplus}{N}-CH_3Cl^{\ominus}$ |
| 26 | $C_{16}H_{33}-\overset{\oplus}{N}-(CH_3)_3Cl^{\ominus}$ |

Beispiel 27

Die Kondensation von 769,4 g einer 25%igen, aus 202,6 g 2,4-Dinitrochlorbenzol hergestellten Lösung von C.I. Leuco Sulphur Black 1 mit 145,6 g Natrium-monochloracetat wird nach den Angaben des Beispiels 1 durchgeführt. Anschließend wird die Farbsäure durch Zugabe von 159,0 g 32%iger Salzsäure bei pH 2

ausgefällt. Die Farbsäure wird durch Filtration isoliert und mit 3 l Wasser salzfrei gewaschen.

Darauf löst man die erhaltene Farbsäure in 1750 ml Wasser durch Zugabe von 68 ml 10 N Natronlauge, setzt 43,0 g Wasserstoffperoxid 35%ig zu und rührt 6 Stunden bei 25 bis 30 °C nach. Anschließend versetzt man die schwarze Farbstofflösung mit 670 ml einer 2-molaren wäßrigen 2-Ethylhexylammoniumchlorid-Lösung, rührt die Farbstoffsuspension 1 Stunde bei 30 °C nach, filtriert und wäscht den Filterkuchen mit 2,5 l Wasser elektrolytfrei. Der Farbstoff wird bei 80 °C in Vakuum bis zur Gewichtskonstanz getrocknet.
Ausbeute: 312,1 g schwarzes Pulver,
Absorptionsspektrum in Ethanol: $\lambda_{max}$: 590 nm
$COO^{\ominus}$-Gehalt: 10,6 Gew.%

Beispiel 28

104 g C.I. Sulphur Black 11 (Herstellung s. Colour Index, Vol.4, 3. Edition (1971); Bios Final Report No. 983, S.59, 117-129) werden in 1 l Wasser suspendiert und mit 144 ml 10 N Natronlauge und 62,4 g Schwefelnatrium 60%ig versetzt. Das Reaktionsgemisch wird dann 2 Stunden bei 95 bis 100 °C gerührt. Anschließend setzt man eine Lösung von 120,8 g Natrium-monochloracetat in 250 ml Wasser zu und rührt 2 Stunden bei 60 °C nach. Die Fällung der Farbsäure erfolgt durch Zugabe von 212 g einer 30%igen Salzsäure bis pH 3.

Die ausgefallene Farbsäure wird abfiltriert und mit 2 l Wasser salzfrei gewaschen. Der erhaltene Preßkuchen wird in 800 ml Wasser eingetragen und mit 16 ml 10 N Natronlauge auf pH 7,5 gestellt. Darauf wird die dunkelgrüne Lösung mit 20 g Wasserstoffperoxid 35%ig versetzt, 2 Stunden bei 30 °C nachgerührt und mit 220 ml einer 2-molaren wäßrigen 2-Ethylhexylammoniumchlorid-Lösung versetzt.

Das ausgefallene Produkt wird abfiltriert, mit 1 l Wasser elektrolytfrei gewaschen und bei 80 °C im Vakuum bis zur Gewichtskonstanz getrocknet.
Ausbeute: 116,8 g schwarzes Pulver;
Absorptionsspektrum in Ethanol: $\lambda_{max}$: 570 nm
$COO^{\ominus}$-Gehalt: 7,4 Gew.%

## Patentansprüche

**1.** Schwarze wasserunlösliche Schwefelfarbstoffe der Formel I

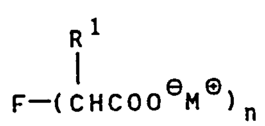

(I)

worin
F den Farbstoffchromophor von C.I. Sulphur oder Leuco Sulphur Black 1, C.I. No.53185; C.I. Sulphur oder Leuco Sulphur Black 2, C.I. No.53195; C.I. Sulphur oder Leuco Sulphur Black 5, C.I. No. 53205; C.I. Sulphur Black 6, C.I. No. 53295; C.I. Sulphur Black 7, C.I. No. 53300; C.I. Sulphur oder Leuco Sulphur Black 10, C.I. No. 53190; C.I. Sulphur Black 11, C.I. No. 53290, oder C.I. Sulphur oder Leuco Sulphur Black 12, C.I. No.53200,
$R^1$ Wasserstoff, Alkyl,
$M^{\oplus}$ ein Kation der Formel II

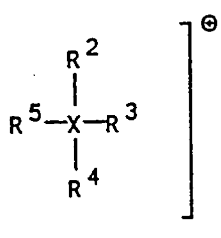

(II)

X Stickstoff oder Phosphor,

$R^2$, $R^3$, $R^4$, $R^5$ unabhängig voneinander Wasserstoff, einen gegebenenfalls substituierten und/oder durch Heterogruppierungen und/oder Arylen unterbrochenen aliphatischen Rest, einen gegebenenfalls substituierten und/oder durch Heterogruppierungen unterbrochenen cycloaliphatischen Rest, einen gegebenenfalls substituierten Arylrest oder $-(CH_2CH_2O)_mR^6$ bedeuten, oder 2 oder 3 der Reste $R^2$, $R^3$, $R^4$, $R^5$ zusammen mit dem quartären Atom X, an das sie gebunden sind, einen heterocyclischen Ring bilden, der auch noch andere Heterogruppierungen enthalten und/oder substituiert sein kann, und
$R^6$ Wasserstoff, Alkyl,
m eine Zahl von 1 bis 5
bedeuten,
n eine so große Zahl bedeutet, daß der Farbstoff I 5 bis 20 Gew.% $-COO^{\ominus}$-Gruppen enthält, wobei in dem Kation II die Summe der Kohlenstoffatome der in $R^2$, $R^3$, $R^4$ und $R^5$ vorhandenen hydrophoben Reste mindestens 6 beträgt.

**2.** Schwefelfarbstoffe nach Anspruch 1, dadurch gekennzeichnet, daß $R^1$ Wasserstoff, Methyl oder Ethyl und/oder $R^2$, $R^3$, $R^4$, $R^5$ unabhängig voneinander Wasserstoff, einen gegebenenfalls ein- oder mehrfach durch Hydroxy, $(C_1\text{-}C_4)$-Alkoxy, primäre, sekundäre oder tertiäre Aminogruppen, gegebenenfalls substituiertes Aryl substituierten und/oder oder ein- oder mehrfach durch -O-, -S-, -NH-, $-N(C_1\text{-}C_4)$-Alkyl)-, Estergruppierungen, Amidgruppierungen, bivalente heterocyclische Reste und/oder Aryl unterbrochenen aliphatischen Rest mit 1 bis 30 C-Atomen; einen ein- oder mehrfach durch Hydroxy, $(C_1\text{-}C_{22})$Alkyl, $(C_1\text{-}C_{22})$Alkoxy, gegebenenfalls substituiertes Aryl, primäre, sekundäre oder tertiäre Aminogruppen, substituierten und/oder ein- oder mehrfach durch -O-, -S-, -NH-, $-N(C_1\text{-}C_4)$Alkyl, Ester- oder Amidgruppierungen unterbrochenen cycloaliphatischen Rest mit 5 bis 12 C-Atomen; einen gegebenenfalls ein- oder mehrfach durch Hydroxy, Halogen, Trifluormethyl, primäre, sekundäre oder tertiäre Aminogruppen und/oder gegebenenfalls substituiertes Aryl substituierten und/oder durch Heterogruppierungen und/oder Arylen unterbrochenen aliphatischen Rest mit 1 bis 30 C-Atomen und/oder einen gegebenenfalls durch einen substituierten und/oder durch Heterogruppierungen unterbrochenen cycloaliphatischen Rest mit 5 bis 12 C-Atomen substituierten Arylrest mit 5 bis 12 C-Atomen bedeuten oder 2 oder 3 der Reste $R^2$, $R^3$, $R^4$, $R^5$ zusammen mit dem quartären Atom X, an das sie gebunden sind, einen 5- oder 6-gliedrigen heterocyclischen Ring bilden, der auch zusätzlich noch -O-, -N=, -NH- und/oder $-N(C_1\text{-}C_4)$Alkyl enthalten und/oder einen ankondensierten Ring besitzen und/oder ein- oder mehrfach durch einen gegebenenfalls ein- oder mehrfach durch Hydroxy, $(C_1\text{-}C_4)$Alkoxy, primäre, sekundäre oder tertiäre Aminogruppen, gegebenenfalls substituiertes Aryl und/oder ein- oder mehrfach durch -O-, -S-, -NH-, $-N((C_1\text{-}C_4)$Alkyl)-, Estergruppierungen, Amidgruppierungen, bivalente heterocyclische Reste und/oder Aryl unterbrochenen aliphatischen Rest mit 1 bis 30 C-Atomen; einen ein- oder mehrfach durch Hydroxy, $(C_1\text{-}C_{22})$Alkyl, $(C_1\text{-}C_{22})$Alkoxy, gegebenenfalls substiuiertes Aryl, primäre, sekundäre oder tertiäre Aminogruppen, substituierten und/oder ein-oder mehrfach durch -O-, -S-, -NH-, $-N((C_1\text{-}C_4)$-Alkyl), Ester- oder Amidgruppierungen unterbrochenen cycloaliphatischen Rest mit 5 bis 12 C-Atomen substituiert sein kann, bilden und/oder $R^6$ Wasserstoff oder $(C_1\text{-}C_4)$Alkyl bedeutet.

**3.** Schwefelfarbstoffe nach Anspruch 1 und/oder 2, dadurch gekennzeichnet, daß F den Farbstoffchromophor des C.I. Leuco Sulphur Black 1, C.I. No. 53185, bedeutet und/oder daß im Farbstoffmolekül 7 bis 15 % Carboxylgruppen vorhanden sind.

**4.** Schwefelfarbstoffe nach einem oder mehreren der Ansprüche 1 bis 3, dadurch gekennzeichnet, daß die Summe der Kohlenstoffatome der in den Resten $R^2$ bis $R^5$ vorhandenen aliphatischen, cycloaliphatischen und/oder Arylresten 6 bis 14 beträgt.

**5.** Verfahren zur Herstellung der Schwefelfarbstoffe eines oder mehrerer der Ansprüche 1 bis 4, dadurch gekennzeichnet, daß ein Schwefelfarbstoff der Formel III

$$F^{\ominus}Y^{\oplus} \quad \text{(III)}$$

worin
$F^{\ominus}$ den Farbstoffchromophor von C.I. Leuco Sulphur Black 1, 2, 5, 6, 7, 10, 11 oder 12 und
$Y^{\oplus}$ ein Alkalikation
bedeuten, mit einer $\alpha$-Halogencarbonsäure der Formel IV

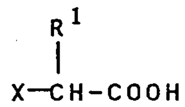

(IV)

worin
X Chlor oder Brom und
$R^1$ Wasserstoff, Methyl oder Ethyl
bedeuten oder einem ihrer Alkalisalze umgesetzt wird und daß die dabei entstandene Verbindung der Formel Ia

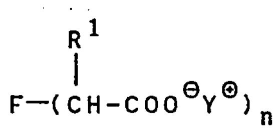

(Ia)

für den Fall, daß $F^{\ominus}$ und F den Farbstoffchromophor des C.I. Leuco Sulphur Blacks 6, 7 oder 11 bedeutet, oxidiert, und für den Fall, daß $F^{\ominus}$ und F den Farbstoffchromophor des C.I. Leuco Sulphur Black 1, 2, 5, 10 oder 12 bedeutet, gewünschtenfalls oxidiert und entweder:

a) mit einer quartären Verbindung der Formel V

$M^{\oplus}Z^{\ominus}$ (V)

worin
$M^{\oplus}$ die in Anspruch 1 angegebene Bedeutung besitzt und $Z^{\ominus}$ ein Säureanion bedeutet,
umgesetzt wird, oder

b) aus der Lösung der Verbindung der Formel Ia durch Einstellen eines sauren pH-Werts die Farbstoffsäure der Formel Ib

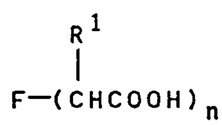

(Ib)

abgeschieden und mit einem Amin der Formel IX

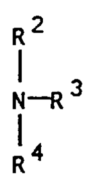

(IX)

worin
$R^2$, $R^3$ und $R^4$ die in Anspruch 1 angegebene Bedeutung besitzen, neutralisiert wird.

**6.** Abänderung des Verfahrens nach Anspruch 5, dadurch gekennzeichnet, daß nach der Herstellung der Verbindung Ia die für den Fall, daß $F^{\ominus}$ bzw. F den Farbstoffchromophor des C.I. Leuco Sulphur Black 6, 7 oder 11 bedeutet, vorzunehmende und in den anderen Fällen gewünschtenfalls vorzunehmende Oxidation so durchgeführt wird, daß aus der Lösung der Verbindung Ia durch Einstellen eines sauren pH-Werts die Farbstoffsäure der Formel Ib abgeschieden, abgetrennt und wieder aufgelöst und dann oxidiert und danach mit einer quartären Verbindung der Formel V umgesetzt oder die Farbstoffsäure der Formel Ib abgeschieden und dann mit einem Amin der Formel IX neutralisiert wird.

**7.** Verwendung der wasserunlöslichen Schwefelfarbstoffe der Formel I eines oder mehrerer der Ansprüche 1 bis 4 als Infrarot-Absorber, als Farbmittel oder Ladungssteuerungsmittel für elektrophotographische Toner, sowie zur Herstellung von Tinten und Aufzeichnungsflüssikeiten, insbesondere für Tintenstrahl- oder Ink-Jet-Verfahren, sowie für das Hot-Melt-Druckverfahren.

**8.** Aufzeichnungsflüssigkeit, insbesondere für das Tintenstrahl- oder Ink-Jet-Druckverfahren, enthaltend in einer organischen Lösung einen Farbstoff I eines oder mehrerer der Ansprüche 1 bis 4.

**9.** Aufzeichnungsflüssigkeit nach Anspruch 8, dadurch gekennzeichnet, daß sie 0,5 bis 20 Gew.%, vorzugsweise 0,5 bis 15 Gew.%, eines Farbstoffs derFormel I enthält.

**10.** Aufzeichnungsflüssigkeit nach Anspruch 8 und/oder 9, dadurch gekennzeichnet, daß sie 99,5 bis 80, vorzugsweise 99,5 bis 85 Gew.% eines organischen Lösungsmittels oder Lösungsmittelgemisches enthält.

## Claims

**1.** Black water-insoluble sulphur dyes of the formula I

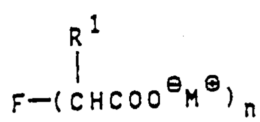

(I)

in which F is the dye chromophore of C.I. Sulphur or Leuco Sulphur Black 1, C.I. No. 53185; C.I. Sulphur or Leuco Sulphur Black 2, C.I. No. 53195; C.I. Sulphur or Leuco Sulphur Black 5, C.I. No. 53205; C.I. Sulphur Black 6, C.I. No. 53295; C.I. Sulphur Black 7, C.I. No. 53300; C.I. Sulphur or Leuco Sulphur Black 10, C.I. No. 53190; C.I. Sulphur Black 11, C.I. No. 53290, or C.I. Sulphur or Leuco Sulphur Black 12, C.I. No. 53200,
$R^1$ is hydrogen, alkyl,
$M^{\oplus}$ is a cation of the formula II

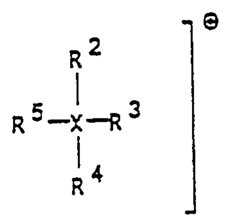

(II)

X is nitrogen or phosphorus,
$R^2$, $R^3$, $R^4$, $R^5$, independently of one another, are hydrogen, an aliphatic radical which is substituted or unsubstituted and/or interrupted by hetero groupings and/or arylene, a cycloaliphatic radical which is substituted or unsubstituted and/or interrupted by hetero groupings, a substituted or unsubstituted aryl radical or $-(CH_2CH_2O)_mR^6$, or 2 or 3 of the radicals $R^2$, $R^3$, $R^4$, $R^5$ together with the quaternary atom X to which they are attached form a heterocyclic ring which may also contain other hetero groupings and/or be substituted, and
$R^6$ is hydrogen, alkyl,
m is a number from 1 to 5,
n is such a large number that the dye I contains 5 to 20% by weight of $-COO^{\ominus}$ groups,
the sum of carbon atoms of the hydrophobic radicals present in $R^2$, $R^3$, $R^4$ and $R^5$ in cation II being at least 6.

**2.** Sulphur dyes according to Claim 1, characterized in than $R^1$ is hydrogen, methyl or ethyl and/or $R^2$, $R^3$, $R^4$, $R^5$, independently of one another, are hydrogen, an aliphatic radical having 1 to 30 C atoms which is unsubstituted or mono- or polysubstituted by hydroxyl, $(C_1$-$C_4)$alkoxy, primary, secondary or tertiary

amino groups, substituted or unsubstituted aryl and/or interrupted once or more than once by -O-, -S-, -NH-, -N(($C_1$-$C_4$)alkyl)-, ester groupings, amide groupings, bivalent heterocyclic radicals and/or arylene; a cycloaliphatic radical having 5 to 12 C atoms which is mono- or polysubstituted by hydroxyl, ($C_1$-$C_{22}$)alkyl, ($C_1$-$C_{22}$)alkoxy, substituted or unsubstituted aryl, primary, secondary or tertiary amino groups, and/or interrupted once or more than once by -O-, -S-, -NH-, -N(($C_1$ $C_4$)alkyl)-, ester or amide groupings; an aliphatic radical having 1 to 30 C atoms which is unsubstituted or mono- or polysubstituted by hydroxyl, halogen, trifluoromethyl, primary, secondary or tertiary amino groups and/or substituted or unsubstituted aryl and/or interrupted by hetero groupings and/or arylene and/or an aryl radical which is unsubstituted or substituted by a cycloaliphatic radical having 5 to 12 C atoms which is substituted or unsubstituted and/or interrupted by hetero groupings or 2 or 3 of the radicals $R^2$, $R^3$, $R^4$, $R^5$ together with the quaternary atom X to which they are attached form a 5- or 6-membered heterocyclic ring which additionally can also contain -O-, -N=, -NH- and/or -N(($C_1$-$C_4$)alkyl)- and/or possess a fused-on ring and/or an aliphatic radical having 1 to 30 C atoms which is mono- or polysubstituted by hydroxyl, ($C_1$-$C_4$)alkoxy, primary, secondary or tertiary amino groups, substituted or unsubstituted aryl and/or interrupted once or more than once by -O-, -S-, -NH-, -N(($C_1$-$C_4$)alkyl)-, ester groupings, amide groupings, bivalent heterocyclic radicals and/or aryl; a cycloaliphatic radical having 5 to 12 C atoms which is mono- or polysubstituted by hydroxyl, ($C_1$-$C_{22}$)alkyl, ($C_1$-$C_{22}$)alkoxy, substituted or unsubstituted aryl, primary, secondary or tertiary amino groups, and/or interrupted once or more than once by -O-, -S-, -NH-, -N(($C_1$-$C_4$)alkyl)-,ester or amide groupings, and/or $R^6$ is hydrogen or ($C_1$-$C_4$)-alkyl.

**3.** Sulphur dyes according to Claim 1 and/or 2, characterized in that F is the dye chromophore of C.I. Leuco Sulphur Black 1, C.I. No. 53185, and/or in that 7 to 15% of carboxyl groups are present in the dye molecule.

**4.** Sulphur dyes according to one or more of Claims 1 to 3, characterized in that the sum of carbon atoms of the aliphatic, cycloaliphatic and/or aryl radicals present in the radicals $R^2$ to $R^5$ is 6 to 14.

**5.** Process for preparing the sulphur dyes of one or more of Claims 1 to 4, characterized in that a sulphur dye of the formula III

$F^{\ominus}Y^{\oplus}$ (III)

in which
$F^{\ominus}$ is the dye chromophore of C.I. Leuco Sulphur Black 1, 2, 5, 6, 7, 10, 11 or 12 and
$Y^{\oplus}$ is an alkali metal cation,
is reacted with an $\alpha$-halocarboxylic acid of the formula IV

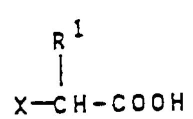
(IV)

in which
X is chlorine or bromine and
$R^1$ is hydrogen, methyl or ethyl,
or an alkali metal salt thereof, and in that the resulting compound of the formula Ia

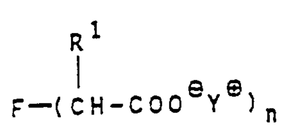
(Ia)

is oxidized in the case where $F^{\ominus}$ and F are the dye chromophore of C.I. Leuco Sulphur Black 6, 7 or 11, and is oxidized, if desired, in the case where $F^{\ominus}$ and F are the dye chromophore of C.I. Leuco Sulphur Black 1, 2, 5, 10 or 12, and either:

a) the resulting compound is reacted with a quaternary compound of the formula V

$M^{\oplus}Z^{\ominus}$ (V)

in which
$M^{\oplus}$ has the meaning given in Claim 1 and
$Z^{\ominus}$ is an acid anion,
or
b) the dye acid of the formula Ib

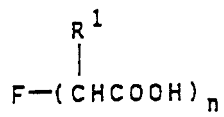

(Ib)

is precipitated from the solution of the compound of the formula Ia by adjusting the pH to an acid value and neutralized with an amine of the formula IX

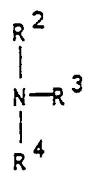

(IX)

in which
$R^2$, $R^3$ and $R^4$ have the meaning given in Claim 1.

**6.** Modification of the process according to Claim 5, characterized in that after preparing the compound Ia the oxidation to be performed in the case where $F^{\ominus}$ or F is the dye chromophore of C.I. Leuco Sulphur Black 6, 7 or 11 and to be performed, if desired, in the other cases is carried out such that the dye acid of the formula Ib is precipitated from the solution of the compound Ia by adjusting the pH to an acid value, separated off and redissolved and then oxidized and then reacted with a quaternary compound of the formula V, or the dye acid of the formula Ib is precipitated and then neutralized with an amine of the formula IX.

**7.** Use of the water-insoluble sulphur dyes of the formula I of one or more of Claims 1 to 4 as infrared absorbers, as colorants or charge-control agents for electrophotographic toners, and for producing inks and recording fluids, in particular for the ink-jet method, and for the hot-melt printing method.

**8.** Recording fluid, in particular for the ink-jet printing method, containing a dye I of one or more of Claims 1 to 4 in an organic solution.

**9.** Recording fluid according to Claim 8, characterized in that it contains 0.5 to 20% by weight, preferably 0.5 to 15% by weight, of a dye of the formula I.

**10.** Recording fluid according to Claim 8 and/or 9, characterized in that it contains 99.5 to 80, preferably 99.5 to 85, % by weight of an organic solvent or solvent mixture.

## Revendications

**1.** Colorants noirs au soufre insolubles dans l'eau de formule I

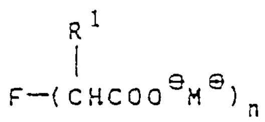

(I)

dans laquelle

- F signifie le chromophore des colorants du C.I. Sulphur ou Leuco Sulphur Black 1, C.I. No. 53185 ; Sulphur ou Leuco Sulphur Black 2, C.I. No. 53195 ; Sulphur ou Leuco Sulphur Black 5, C.I. No. 53205 ; Sulphur Black 6, C.I. No. 53295 ; Sulphur Black 7, C.I. No. 53300 ; Sulphur ou Leuco Sulphur Black 10, C.I. No. 53190 ; Sulphur Black 11, C.I. No. 53290, ou Sulphur ou Leuco Sulphur Black 12, C.I. No. 53200,
- R1 signifie un hydrogène, un alkyle,
- $M^{\oplus}$ signifie un cation de formule II

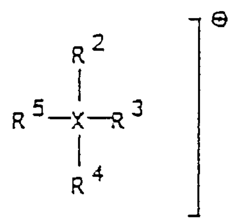

(II)

- X signifie un azote ou un phosphore,
- $R^2$, $R^3$, $R^4$, $R^5$ , indépendamment l'un de l'autre, signifient un hydrogène, un reste aliphatique éventuellement substitué et/ou interrompu par des hétérogroupes et/ou des groupes arylène, un reste cycloaliphatique éventuellement substitué et/ou interrompu par des hétérogroupes, un reste aryle éventuellement substitué ou $-(CH_2CH_2O)-mR^6$, ou bien deux ou trois des radicaux $R^2$, $R^3$, $R^4$, $R^5$, ensemble avec l'atome quaternaire X, auquel ils sont liés, forment un cycle hétérocyclique, qui peut aussi contenir encore d'autres hétérogroupes et/ou qui peut être substitué, et
- $R^6$ signifie un hydrogène, un alkyle,
- m signifie un nombre compris entre 1 et 5,
- n signifie un nombre d'une grandeur telle que le colorant I contienne entre 5 et 20% en poids de groupes $-COO^{\ominus}$,

la somme des atomes de carbone du reste hydrophobe présents dans les radicaux $R^2$, $R^3$, $R^4$ et $R^5$ dans le cation II étant égal au moins à 6.

**2.** Colorant au soufre selon la revendication 1, caractérisé en ce que $R^1$ signifie un hydrogène, un méthyle ou un éthyle et/ou les radicaux $R^2$, $R^3$, $R^4$, $R^5$, indépendamment l'un de l'autre, signifient un hydrogène, un reste aliphatique ayant de 1 à 30 atomes de carbone substitués éventuellement ou une plusieurs fois par un hydroxy, un alcoxy en $C_1$-$C_4$, un groupe amino primaire, secondaire ou tertiaire, un aryle éventuellement substitué et/ou interrompu une ou plusieurs fois par -O-, -S-, -NH-, -N(alkyles en $C_1$-$C_4$)-, des groupements esters, des groupements amides, des restes hétérocyliques bivalents et/ou des aryles ; un reste cycloaliphatique ayant de 5 à 12 atomes de carbone substitué une ou plusieurs fois par un hydroxy, un alkyle en $C_1$-$C_{22}$, un alcoxy en $C_1$-$C_{22}$, un aryle éventuellement substitué, un groupe amino primaire, secondaire ou tertiaire et/ou interrompu une ou plusieurs fois par un -O-, un -S-, un -NH-, un -N(alkyle en $C_1$-$C_4$)-, des groupements esters ou amides ; un reste aliphatique ayant de 1 à 30 atomes de carbone substitué éventuellement une ou plusieurs fois par un hydroxy, un halogène, un trifluorométhyle, un groupe amino primaire, secondaire ou tertiaire et/ou un aryle éventuellement substitué et/ou interrompu par un hétérogroupe et/ou un aryle et/ou un reste aryle ayant de 5 à 12 atomes de carbone substitué par un reste cycloaliphatique ayant de 5 à 12 atomes de carbone

subsitué et/ou terminé par un hétérogroupe ou deux ou trois des restes $R^2$, $R^3$, $R^4$, $R^5$ forment un cycle hétérocyclique à 5 ou 6 chaînons en association avec un atome quaternaire X sur lequel ils sont liés, cycle qui contient aussi de plus encore un -O-, -N=, -NH- et/ou -N(alkyle en $C_1$-$C_4$)- et/ou possédant un cycle fusionné et/ou une ou plusieurs fois par un reste aliphatique ayant de 1 à 30 atomes de carbone interrompu par un hydroxy, un alcoxy en $C_1$-$C_4$, un groupement amino primaire, secondaire ou tertiaire, un aryle éventuellement substitué et/ou une ou plusieurs fois par un -O-, un -S-, un -NH-, un -N-(alkyle en $C_1$-$C_4$)-, des groupements esters ou amides, un reste hétérocylique bivalent et/ou un aryle ; un reste cycloaliphatique ayant de 5 à 12 atomes de carbone substitué une ou plusieurs fois par un hydroxy, un alkyle en $C_1$-$C_{22}$, un alcoxy en $C_1$-$C_{22}$, un aryle éventuellement substitué, un groupe amino primaire, secondaire ou tertiaire, et/ou interrompu une ou plusieurs fois par un -O-, -S-, -NH-, -N-(alkyle en $C_1$-$C_4$), un groupement ester ou amide, et/ou $R^6$ signifie un hydrogène ou un alkyle en $C_1$-$C_4$.

3. Colorant au soufre selon la revendication 1 et/ou 2, caractérisé en ce que F signifie le chromophore du colorant Leuco Sulphur Balck 1, C.I. No 53185 et/ou en ce que 5 à 15% de groupes carboxyles sont présents dans la molécule de colorant.

4. Colorant au soufre selon une ou plusieurs des revendications 1 à 3, caractérisé en ce que la somme des atomes de carbone des restes aliphatiques, cycloaliphatiques et/ou aryles présents dans les restes de $R^2$ à $R^5$ est comprise entre 6 et 14.

5. Procédé de préparation du colorant au soufre selon une ou plusieurs des revendications 1 à 4, caractérisé en ce qu'un colorant au soufre de formule III

$F^{\ominus}Y^{\oplus}$ (III)

dans laquelle
$F^{\ominus}$ signifie le chromophore des colorants Leuco Sulphur Black 1, 2, 5, 6, 7, 10, 11 ou 12 et
$Y^{\oplus}$ signifie un cation de métal alcalin,
est mis en réaction avec un acide carboxylique $\alpha$-halogéné de formule IV

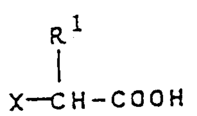

(IV)

dans laquelle
X signifie un chlore ou un brome et
$R^1$ signifie un hydrogène, un méthyle ou un éthyle,
ou un de ses sels alcalins et
en ce que le composé simultanément formé de formule Ia

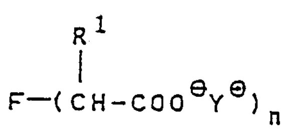

(Ia)

dans le cas où $F^{\ominus}$ et F signifient le chromophore des colorants Leuco Sulphur Black 6, 7 ou 11, est oxydé, et dans le cas où $F^{\ominus}$ et F signifient le chromophore des colorants Leuco Sulphur Black 1, 2, 5, 10 et 12, est oxydé dans le cas désiré et est mis en réaction soit :
a) avec un composé quaternaire de formule V

$M^{\oplus}Z^{\ominus}$ (V)

dans laquelle
$M^{\oplus}$ possède la signification donnée dans la revendication 1 et

$Z^{\ominus}$ signifie un anion d'acide,

soit

b) l'acide du colorant de formule Ib

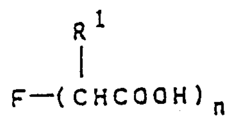

(Ib)

se dépose dans la solution du composé de formule Ia en établissant une valeur de pH acide et est neutralisé à l'aide d'une amine de formule IX

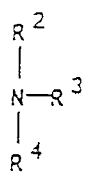

(IX)

dans laquelle

$R^2$, $R^3$ et $R^4$ possèdent la signification donnée dans la revendication 1.

**6.** Modification du procédé selon la revendication 5, caractérisée en ce que, dans le cas où $F^{\ominus}$ ou bien F signifie le chromophore des colorants Leuco Sulphur Black 6, 7 ou 11, l'oxydation à effectuer est, dans les autres cas, l'oxydation à effectuer dans le cas souhaité, est réalisée ainsi après la préparation du composé Ia, l'acide du colorant de formule Ib se dépose dans la solution du composé Ia après établissement d'un pH acide, il est séparé et alors oxydé et ensuite mis en réaction avec un composé quaternaire de formule V ou l'acide du colorant de formule Ib est précipité et ensuite neutralisé avec une amine de formule IX.

**7.** Utilisation des colorants au soufre insolubles dans l'eau de formule I selon une ou plusieurs des revendications 1 à 4 en tant qu'absorbeurs infrarouge, qu'agents de coloration ou agents de dispersion de charge pour toner électrographique, ainsi que pour la préparation d'encres et de liquides d'impression en particulier pour procédé à jet d'encre ou Ink-Jet, ainsi que pour le procédé d'impression Hot-Melt.

**8.** Liquide d'impression, en particulier pour le procédé d'impression à jet d'encre ou Ink-Jet, comprenant un colorant I selon une ou plusieurs des revendications 1 à 4 en solution organique.

**9.** Liquide d'impression selon la revendication 8, caractérisé en ce qu'il contient entre 0,5 et 20% en poids d'un colorant de formule I, de préférence entre 0,5 et 15% en poids.

**10.** Liquide d'impression selon la revendication 8 et/ou 9, caractérisé en ce qu'il contient entre 99,5 et 80% en poids d'un solvant organique ou d'un mélange de solvants, de préférence entre 99,5 et 85% en poids.